# EUROPÄISCHE PATENTSCHRIFT

(11) **EP 1 443 276 B1**
(45) Veröffentlichungstag und Bekanntmachung des Hinweises auf die Patenterteilung: **25.08.2010**
(21) Anmeldenummer: 04001700.6
(22) Anmeldetag: 27.01.2004
(51) Int. Cl.: F24D 3/10, F16L 41/02, F16L 41/08

(54) **Anschlusseinrichtung für Heizkörper**
Connection for radiator
Raccordement de radiateur

(30) Priorität: 30.01.2003 DE 10303890
(43) Veröffentlichungstag der Anmeldung: 04.08.2004
(73) Patentinhaber: The Heating Company BVBA, 3650 Dilsen-Stokkem (BE)
(72) Erfinder: Aerts, Frederik, 3580 Beringen (BE); Westhovens, Bert, 3650 Dilsen (BE)
(74) Vertreter: Schrooten, Rolf

(56) Entgegenhaltungen:
- EP-A2- 1 245 909
- WO-A1-2004/029520
- DE-A- 19 608 781
- FR-A- 2 137 370

## Beschreibung

Die vorliegende Erfindung betrifft einen Heizkörper mit einer an einem Heizrohr des Heizkörpers befestigten Anschlusseinrichtung zum Anschluss des Heizkörpers an ein Anschlusselement. Unter dem Anschlusselement, an das der Heizkörper vermittels der Anschlusseinrichtung erfindungsgemäß angeschlossen werden kann, können hierbei beispielsweise ein Ventil und/oder ein Anschlussadapter und/oder insbesondere die Rohrleitungen einer Heizungsanlage verstanden werden. Die Anschlusseinrichtung hat einen Vorlaufanschlussstutzen und einen Rücklaufanschlussstutzen, die jeweils mit einem ersten Ende, das als Heizkörperende bezeichnet wird, an das Heizrohr des Heizkörpers angeschlossen sind und mit dem zweiten Ende, das als Anschlussende bezeichnet wird, an ein Anschlusselement anschließbar sind.

Derartige Anschlusseinrichtungen sind aus der EP 1 245 909 A2 bekannt. Sie werden insbesondere an Design-Heizkörpern eingesetzt, wo sie meistens am untersten Heizrohr angeordnet werden.

Die bekannten Anschlusseinrichtungen bestehen dabei aus zwei von einander getrennten Anschlussstutzen, die üblicherweise im Abstand von 50 mm jeweils separat am Heizkörper befestigt, vorzugsweise angeschweißt werden. Das bedeutet nicht nur ein höheres Aufkommen an Einzelteilen, sondern auch einen erhöhten Aufwand und somit höhere Herstellungskosten bei der Montage dieser Anschlusseinrichtungen.

Von besonderem Nachteil ist jedoch, dass eine exakte Positionierung der beiden Anschlussstutzen relativ zum Heizkörper sowie relativ zueinander nur schwierig zu erreichen und mit einem erheblichen Aufwand verbunden ist. Insbesondere durch Verzugserscheinung bei den Schweißverbindungen kann es hierbei zu Fehlpositionierungen kommen. Je nach Anschlussart können auch schon kleinste Fehlstellungen von erheblichem Nachteil vor allem bezüglich der Dichtheit des Anschlusses sein.

So die beiden Stutzen sowohl winklig um ein Heizrohr herum versetzt zueinander als auch in ihrer axialen Position unterschiedlich weit weg von dem Heizrohr befestigt sein. Beides kann zu großen Schwierigkeiten beim dichten an das Anschlusselement führen oder je nach Konstruktion ein dichtes Anschließen sogar vollkommen unmöglich machen.

Aus der FR-A-2 137 370 ist eine Anschlusseinrichtung zum nachträglichen Anschluss eines Behandlungsgerätes, beispielsweise eines Filters, eines Dnickverminderers, eines Durchlauferhitzers oder eines ähnlichen Gerätes an eine von einem Fluid durchflossene Rohrleitung bekannt. Das mit dieser Anschlusseinrichtung anzuschließende Behandlungsgerät wird dabei nicht an zwei Anschlussstutzen eines anzuschließenden Elements, sondern an eine Stelle einer bis dahin durchgehenden Rohrleitung angeschlossen, an welcher ursprünglich noch gar kein Anschluss eines Behandlungsgerätes vorgesehen war. Deshalb erfolgt der Anschluss des Behandlungsgerätes hierbei in der Art, dass die ursprünglich durchgehende Rohrleitung durch zwei Gewindestößel flüssigkeitsdicht zusammengequetscht wird und danach die beiden neben dieser Zusammenquetschungsstelle liegenden Rohrbereiche durch das gewaltsame Einbringen von jeweils einem Stanzrohr in der Art durchbrochen werden, dass die Wandung der Rohrleitung durchlöchert wird. Die Anbringung dieser Anschlusseinrichtung zerstört dabei die Rohrleitung.

Aufgabe der vorliegenden Erfindung ist es, eine konstruktiv einfache und preiswert herzustellende Kombination von Heizkörper mit daran befestigter Anschlusseinrichtung der eingangs genannten Art zu schaffen, die eine leichte Montierbarkeit der Anschlusseinrichtung sowie eine exakte Positionierung der beiden Anschlussstutzen ermöglicht. Insbesondere soll diese exakte Positionierung auch bei einer Schweißverbindung mit einem Heizkörper gewährleistet sein.

Diese Aufgabe wird erfindungsgemäß durch einen Heizkörper mit daran befestigter Anschlusseinrichtung nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der Vorlaufanschlussstutzen und der Rücklaufanschlussstutzen einstückig miteinander ausgeführt sind und dass der Vorlaufanschlussstutzen in einem Abstand vom angeordnet ist, wobei ein sich über den Abstand erstreckendes Verbindungselement vorgesehen ist, das einstückig mit dem und dem Rücklaufanschlussstutzen ausgeführt ist.

Auf diese Weise sind beide Anschlussstutzen bereits vor der endgültigen Befestigung am Heizkörper relativ zueinander vorpositioniert.

Ein wesentlicher Vorteil liegt dabei darin, dass einerseits die Anzahl der zu montierenden Teile sowie andererseits die Anzahl der bei der Montage auszuführenden Verbindungsvorgänge reduziert wird, so dass die Montage wesentlich vereinfacht und die Herstellungs- und Montagekosten reduziert werden können. Außerdem besteht ein weiterer wesentlicher Vorteil darin, dass stets eine exakte Positionierung der beiden Anschlussstutzen erreicht wird. Auch wenn die Anschlussstutzen am Heizkörper angeschweißt werden sind fehlerhafte Ausrichtungen der Anschlussstutzen zueinander ausgeschlossen. Deshalb sind auch die nachfolgenden Montagearbeiten beim Anschluss der erfindungsgemäßen Anschlusseinrichtung an die Rohrleitungen oder ein anderes Anschlusselement besonders kostengünstig durchführbar.

Ein weiterer Vorteil liegt darin, dass auf diese Weise eine besonders ansprechende optische Wirkung erzielbar ist, da bei geeigneter Gestaltung des Venbindungselements die sonst oftmals erforderliche Anbringung von Abdeckelementen zum Abdecken des Zwischenraums zwischen den beiden Anschlussstuten entfallen kann.

Eine besonders gute Optik kann dabei dadurch erreicht werden, dass der Abstand zwischen den beiden Anschlussstutzen über seine gesamte Längserstreckung und vorzugsweise auch über die gesamte Höhe der Anschlussstutzen in Querrichtung vollständig durch das Verbindungselement ausgefüllt ist. D.h. das Verbindungselement weist überall eine Breite auf, die mindestens dem Innendurchmesser der Anschlussstutzen entspricht.

Besonders vorteilhaft ist es ferner, wenn der Vorlaufanschlussstutzen und der Rücklaufanschlussstutzen in ein einziges Gehäuse integriert sind, wobei das Gehäuse ebenfalls einstückig mit den beiden Anschlussstutzen ausgeführt ist.

Gemäß einer besonders bevorzugten Ausführungsform der Erfindung umfasst Anschlusseinrichtung dabei ein massives Gehäuse, in das der Vorlaufanschlussstutzen und der Rücklaufanschlussstutzen eingebracht sind. Vorteilhafterweise kann das Gehäuse dabei aus einem Metallblock bestehen, in den die Anschlussstutzen hinein gebohrt und/oder gefräst sind.

Wenn das Gehäuse aus Metall gefertigt ist kann es nach der Befestigung am Heizkörper zusammen mit diesem lackiert werden, so dass das Gehäuse der Anschlusseinrichtung exakt den gleichen Farbton aufweist wie der Heizkörper. Bei der sonst bekannten Verwendung von Abdeckelementen aus Kunststoff kann dagegen der gleiche Farbton oftmals nicht genau getroffen werden.

Besonders vorteilhaft ist es dabei, wenn die Anschlussenden der Anschlussstutzen in einer ebenen Seitenfläche, insbesondere in der Unterseite, des Gehäuses münden. Auf diese Weise kann bei ansprechender Optik eine besonders einfache Anschließbarkeit an das Anschlusselement erreicht werden.

Eine besonders einfache Anschließbarkeit der Anschlusseinrichtung an den Heizkörper kann hierbei ferner dadurch erreicht werden, dass das Gehäuse an einer Seite, vorzugsweise an seiner Oberseite, eine Ausnehmung aufweist, in die ein Abschnitt eines Heizrohrs des Heizkörpers zumindest teilweise eingebracht ist, wobei die Heizkörperenden der Anschlussstutzen im Bereich der Ausnehmung münden. Vorteilhafterweise kann die Ausnehmung im Querschnitt halbkreisförmig ausgebildet sein, um ein kreisrundes Heizrohr dicht aufnehmen zu können.

Gemäß einer besonders bevorzugten Ausführungsform der Erfindung weisen Anschlussstutzen an ihren Anschlussenden jeweils eine Dichtfläche zur Anlage an entsprechenden Bereichen des Anschlusselements auf, wobei die konisch oder vorzugsweise eben ausgebildet sein können.

Besonders vorteilhaft ist es hierbei, wenn die Dichtflächen der beiden axial auf gleicher Höhe angeordnet sind. Bei einer ebenen Ausbildung der Dichtflächen sind sie vorteilhafterweise in einer gemeinsamen angeordnet. Diese exakte axiale Ausrichtung der Dichtflächen bleibt auch bei einer Verbindung der einstückigen Anschlusseinrichtung an einem Heizkörper durch einen Schweißvorgang erhalten, da die beiden Anschlussstützen nicht einem unterschiedlich stark Wärmeverzug unterliegen können.

Gemäß einer weiteren besonders bevorzugten Ausführungsform der Erfindung Befestigungsmittel zum Befestigen des Anschlusselements an der Anschlusseinrichtung vorgesehen, die einstückig mit den beiden Anschlussstutzen ausgeführt sind. Die Befestigungsmittel können vorzugsweise formschlüssig und/oder kraftschlüssig wirken.

Wenn zwischen dem Vorlaufanschlussstutzen und dem Rücklaufanschlussstutzen ein Verbindungselement vorgesehen ist oder wenn die Anschlusseinrichtung ein massives Gehäuse umfasst, ist es dabei besonders vorteilhaft, wenn zwischen den Mündungen der Anschlussenden der beiden Anschlussstutzen eine Gewindebohrung als Befestigungsmittel in das Verbindungs- bzw. in das Gehäuse eingebracht ist. Hierdurch kann vermittels einer das Anschlusselement beaufschlagenden und in die Gewindebohrung einge-Befestigungsschraube auf besonders einfache Weise ein sicherer und dauerhaft dichter Halt des Anschlusselements erreicht werden, wobei vorteilhafterweise geeignete Dichtungsmittel zwischen der Anschlusseinrichtung und dem Anschlusselement vorgesehen sind.

Wenn die Gewindebohrung in ein massives Gehäuse eingebracht ist, kann das Gewinde mit einer größeren Einschraubtiefe ausgeführt werden, so dass eine besonders stabile Verbindung mit einem sicheren Halt erzielt werden kann. Gegenüber einer Ausführung der bisher bekannten Art, bei der zwei getrennte zunächst separat an den Heizkörper geschweißt werden und anschließend ein Verbindungssteg mit einer derartigen Gewindebohrung zwischen den beiden Anschlussstutzen angeschweißt wird, sind bei der vorgenannten erfindungsgemäßen Ausführungsform nicht mehr vier, sondern noch eine einzige Schweißverbindung erforderlich, die besonders günstig durch Widerstandsschweißen ausgeführt sein kann.

Vorzugsweise kann dabei an oder neben der Gewindebohrung eine Anschlagfläche angeordnet sein, gegen die ein Bereich des Anschlusselements im befestigten Zustand anschlägt. Auf diese Weise kann ein für einen dichten Anschluss erforderlicher Abstand zwischen dem Anschlusselement und der Anschlusseinrichtung exakt eingehalten und ein zu weites Einschrauben einer Befestigungsschraube und somit eine möglicher Beschädigung der gegebenenfalls eingesetzten Dichtungsmittel verhindert werden. Vorzugsweise ist die Anschlagfläche gegenüber den Mündungen der Anschlussenden der Anschlussstutzen vertieft angeordnet.

Gemäß einer alternativen Ausführungsform der Erfindung können auch die beiden Anschlussstutzen an ihrem Anschlussende innenseitig ein Anschlussgewinde aufweisen, um beispielsweise Rohrleitungsenden in an sich bekannter Weise befestigen zu können.

Gemäß einer besonders einfach herzustellenden Ausführungsform wird vorgeschlagen, dass die beiden Anschlussstutzen geradlinig innerhalb der Anschlusseinrichtung verlaufen. Gemäß einer alternativen Ausführungsform können die Heizkörperenden der Anschlussstutzen jedoch auch in einem Winkel, insbesondere von 90°, zu den Anschlussenden der Anschlussstutzen angeordnet sein, so dass das den Heizkörper durchströmende Heizmedium innerhalb der Anschlussstutzen der Anschlusseinrichtung umgelenkt wird.

Besonders vorteilhaft ist es ferner, wenn die Anschlusseinrichtung an dem Heizrohr des Heizkörpers angeschweißt ist, wobei die Verbindung vorzugsweise durch Laserschweißen erfolgen kann.

Weitere Vorteile und Merkmale der Erfindung ergeben sich aus der nachfolgenden Beschreibung und den in den Zeichnungen dargestellten Ausführungsbeispielen.

### Es zeigen:

- Figur 1:: Oberansicht einer ersten Ausführungsvariante einer erfindungs- gemäßen Anschlusseinrichtung ohne Heizkörper;
- Figur 2:: Unteransicht der Anschlusseinrichtung aus Figur 1;
- Figur 3:: Oberansicht einer zweiten Ausführungsvariante einer erfindungs- gemäßen Anschlusseinrichtung ohne Heizkörper;
- Figur 4:: Unteransicht der Anschlusseinrichtung aus Figur 3;
- Figur 5:: Schematische Seitenansicht einer erfindungsgemäßen Anschluss- einrichtung an einem Heizrohr eines Heizkörpers.

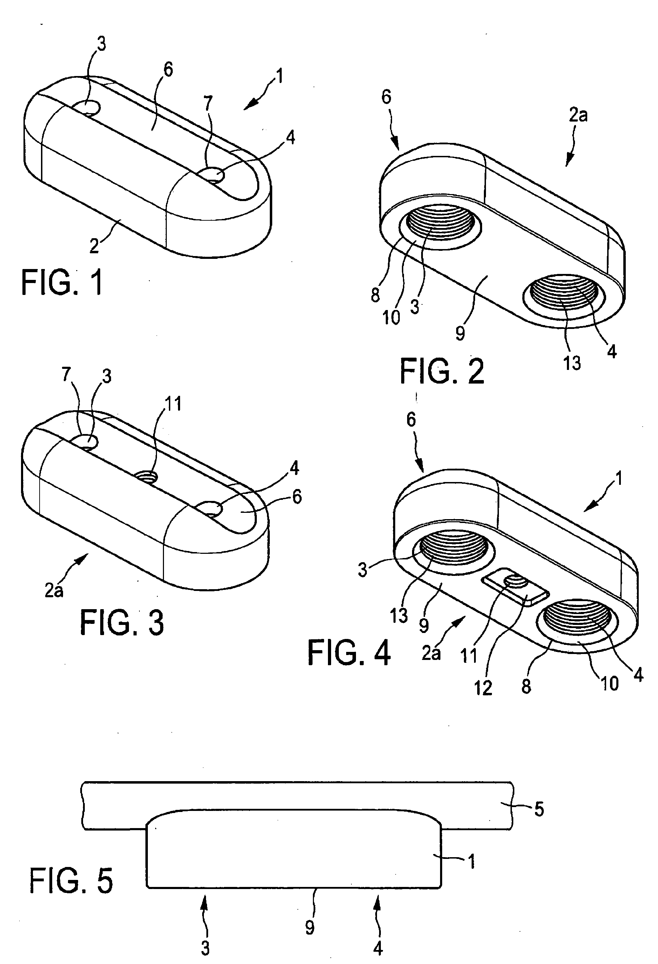

Um die Einzelheiten der Anschlusseinrichtung 1 besser darstellen zu können, ist in den Figuren 1 bis 4 der Heizkörper, an dem die Anschlusseinrichtung 1 befestigt ist, nicht dargestellt.

Die in den Figuren dargestellte Anschlusseinrichtung 1 besteht aus einem massiven Gehäuse 2, in das ein Vorlaufanschlussstutzen 3 und einen Rücklaufanschlussstutzen 4 als geradlinig durchgehende Kanäle eingebracht sind. Die Anschlusseinrichtung 1 wird an einem Heizrohr 5 eines nicht näher dargestellten Röhrenheizkörpers befestigt und dient so zum Anschluss des Heizkörpers an die Rohrleitungen einer Heizungsanlage oder auch an einen Anschlussadapter oder an ein Ventil.

Das Gehäuse 2 ist aus einem massiven Metallblock herausgearbeitet, wobei die Kanten zwischen den Seitenflächen untereinander sowie zwischen den Seitenflächen und der Oberseite aus optischen Gründen abgerundet sind, was bei Design-Heizkörpern von Vorteil ist. Auf diese Weise sind der Vorlaufanschlussstutzen 3 und der Rücklaufanschlussstutzen 4 einstückig miteinander ausgeführt und in das Gehäuse 2 integriert. Gleichzeitig dient der zwischen den beiden Anschlussstutzen 3 und 4 befindliche mittlere Teil des Gehäuses 2 auch als Verbindungselement 2a, das einstückig mit den beiden Anschlussstutzen 3 und 4 ausgeführt ist und den Zwischenraum vollständig so dass keine separaten Abdeckkappen erforderlich sind.

An ihrer Oberseite hat die Anschlusseinrichtung 1 eine im Querschnitt halbkreisförmige Ausnehmung 6, in die die untere Rohrhälfte des Heizrohrs 5 in einem mittleren Bereich des Heizrohrs 5, der zwei Öffnungen zum Ein- und Auslass des Heizmediums und einen dazwischen angeordnete Verschluss aufweist, zur Befestigung einlegbar ist (Figur 5). Alternativ kann die Anschlusseinrichtung aber auch winklig, insbesondere um einen Winkel von 90°, um das Heizrohr 5 herum verschwenkt befestigt werden, wobei die Einlass- und Auslassöffnung dann ebenfalls entsprechend winklig versetzt am Heizrohr 5 angeordnet sind. Die Befestigung kann vorzugsweise durch Widerstandsschweißen oder durch Laserschweißen ausgeführt werden.

Die Anschlussstutzen 3 und 4 münden mit ihrem Heizkörperende 7 im Boden der Ausnehmung 6 und mit ihrem anderen Anschlussende 8 in der gegenüber-Unterseite 9 der Anschlusseinrichtung 1. Am Heizkörperende 7 sind die Innendurchmesser der Anschlussstutzen 3 und 4 kleiner ausgeführt als am Anschlussende 8, um einerseits einen dichten Anschluss an das Heizrohr 5 und andererseits einen problemlosen Anschluss eines Anschlusselementes wie beispielsweise von Rohrleitungen zu ermöglichen.

Bei dem in den Figuren 2 und 4 dargestellten Ausführungsbeispiel ist an den Anschlussenden 8 der Anschlussstutzen 3 und 4 jeweils eine Phase 10 angeordnet, die als Dichtfläche für das nicht dargestellte Anschlusselement dienen kann. Wenn als Anschlusselement beispielsweise ein Anschlussadapter verwendet wird, der zwei Anschlussflansche aufweist, die über jeweils eine Dichtung an die Anschlussstutzen 3 und 4 anpressbar sind, so können die Dichtungen vorteilhafterweise gegen die konischen Flächen der beiden Phasen angepresst werden.

Bei einem derartigen Anschlussadapter, der in der deutschen Patentanmeldung DE 102 43 420 beschrieben ist, auf deren Inhalt in sofern Bezug genommen wird, wird der hierzu notwendige Anpressdruck über ein Befestigungsmittel, vorzugsweise über eine Befestigungsschraube, ausgeübt, die an einem mit dem Heizkörper verbundenen Teil angreift. Dieses Teil wird dabei durch einen separaten Steg mit einem Gewindeloch gebildet, der zwischen den beiden Anschlussstutzen befestigt wird.

Bei der erfindungsgemäßen Anschlusseinrichtung 1 ist ein derartiges zusätzliches Teil nicht mehr erforderlich. Die Figuren 3 und 4 zeigen eine Ausführungsvariante, bei der als Befestigungsmittel eine Gewindebohrung 11 vorzugsweise in der Mitte zwischen den beiden Anschlussstutzen 3 und 4 in massive Gehäuse 2 eingebracht ist. Die Gewindebohrung 11 kann dabei als oben geschlossene Sacklochbohrung oder wie in Figur 3 zu erkennen als oben offene Durchgangsbohrung ausgeführt sein, wodurch eine besonders lange Einschraubtiefe für ein dauerhaft sicheres Anpressen erreicht wird.

Damit die Befestigungsschraube nicht zu weit eingeschraubt werden kann ist Gewindebohrung 11 herum in der Unterseite 9 eine Anschlagfläche 12 vorgesehen, gegen die ein entsprechender Bereich des Anschlussadapters gegebenenfalls eines anderen Anschlusselements im befestigten Zustand anschlägt. Hierdurch wird eine Beschädigung der Dichtungen sicher ausgeschlossen und ein dauerhaft dichter Anschluss gewährleistet.

Die Anschlagfläche 12 ist gegenüber der Unterseite 9 etwas vertieft angeordnet, hier durch eine spanabhebende Bearbeitung einen optimalen axialen Abstand zu den Dichtflächen 10 zu erhalten. Auch dieser Abstand bleibt bei einer Schweißverbindung der einstückigen Anschlusseinrichtung 1 an einem Heizrohr 5 exakt erhalten.

Damit auch Rohrleitungen auf herkömmliche Weise an der Anschlusseinrichtung 1 angeschlossen werden können, sind an den Anschlussenden 8 Innengewinde 13 in die Anschlussstutzen 3 und 4 eingebracht. Auf diese Weise ist die Anschlusseinrichtung 1 besonders flexibel einsetzbar und kann in großen kostengünstig hergestellt werden.

## Patentansprüche

1. Heizkörper mit einer an einem Heizrohr (5) des Heizkörpers befestigten Anschlusseinrichtung (1) zum Anschluss des Heizkörpers an ein Anschlusselement, insbesondere an ein Ventil und/oder unmittelbar an Rohrleitungen einer Heizungsanlage, wobei die Anschlusseinrichtung einen Vorlaufanschlussstutzen (3) und einen Rücklaufanschlussstutzen (4) umfasst, die jeweils mit einem ersten Ende, das als Heizkörperende (7) bezeichnet wird, an das Heizrohr (5) des Heizkörpers angeschlossen sind und mit dem zweiten Ende, das als Anschlussende (8) bezeichnet wird, an ein Anschlusselement anschließbar sind,
**dadurch gekennzeichnet,**
**dass** der Vorlaufanschlussstutzen (3) und der Rücklaufanschlussstutzen (4) einstückig miteinander ausgeführt sind,
und **dass** der Vorlaufanschlussstutzen (3) in einem Abstand vom Rücklaufanschlussstutzen (4) angeordnet ist, wobei ein sich über den Abstand erstreckendes Verbindungselement (2a) vorgesehen ist, das einstückig mit dem Vorlaufanschlussstutzen (3) und dem Rücklaufanschlussstutzen (4) ausgeführt ist.

2. Heizkörper mit einer Anschlusseinrichtung nach Anspruch 1, **dadurch gekennzeichnet, dass** der Abstand über seine gesamte Längserstreckung und vorzugsweise auch über die gesamte Höhe der Anschlussstutzen (3, 4) vollständig in einer Breite durch das Verbindungselement (2a) ausgefüllt ist, die mindestens dem Innendurchmesser der Anschlussstutzen (3, 4) entspricht.

3. Heizkörper mit einer Anschlusseinrichtung nach Anspruch 1 oder 2, d a - **durch** g**ekennzeichnet,** dass der Vorlaufanschlussstutzen (3) und der Rücklaufanschlussstutzen (4) einstückig in ein einziges Gehäuse (2) integriert sind.

4. Heizkörper mit einer Anschlusseinrichtung nach Anspruch 3, **dadurch gekennzeichnet, dass** die Anschlusseinrichtung (1) ein massives Gehäuse (2) umfasst, in das der Vorlaufanschlussstutzen (3) und der Rücklaufanschlussstutzen (4) eingebracht sind, wobei das Verbindungselement (2a) durch einen Teil des Gehäuses (2) gebildet ist.

5. Heizkörper mit einer Anschlusseinrichtung nach Anspruch 4, **dadurch gekennzeichnet, dass** die Anschlussenden (8) der Anschlussstutzen (3, 4) in einer ebenen Seitenfläche oder in der ebenen Unterseite (9) des Gehäuses (2) münden.

6. Heizkörper mit einer Anschlusseinrichtung nach Anspruch 4 oder 5, **dadurch gekennzeichnet, dass** das Gehäuse (2) an einer Seite, vorzugsweise an seiner Oberseite, eine Ausnehmung (6) aufweist, in die ein Abschnitt eines Heizrohrs (5) des Heizkörpers zumindest teilweise eingebracht ist, wobei die Heizkörperenden (7) der Anschlussstutzen (3, 4) im Bereich der Ausnehmung (6) münden.

7. Heizkörper mit einer Anschlusseinrichtung nach einem der vorherigen Ansprüche, **dadurch gekennzeichnet, dass** die Anschlussstutzen (3, 4) an ihren Anschlussenden (8) jeweils eine eben oder konisch ausgebildete Dichtfläche (10) zur Anlage an dem Anschlusselement aufweisen.

8. Heizkörper mit einer Anschlusseinrichtung nach Anspruch 7, **dadurch gekennzeichnet, dass** die Dichtflächen (10) der beiden Anschlussstutzen (3, 4) axial auf gleicher Höhe, insbesondere in einer gemeinsamen Ebene, angeordnet sind.

9. Heizkörper mit einer Anschlusseinrichtung nach einem der vorherigen Ansprüche, **dadurch gekennzeichnet, dass** Befestigungsmittel (11) zum Befestigen des Anschlusselements an der Anschlusseinrichtung (1) vorgesehen sind, die einstückig mit den beiden Anschlussstutzen (3, 4) ausgeführt sind.

10. Heizkörper mit einer Anschlusseinrichtung nach Anspruch 9, **dadurch gekennzeichnet, dass** zwischen den Mündungen der Anschlussenden (8) der beiden Anschlussstutzen (3, 4) eine Gewindebohrung (11) als Befestigungsmittel in das Verbindungselement (2a) eingebracht ist.

11. Heizkörper mit einer Anschlusseinrichtung nach Anspruch 10, **dadurch gekennzeichnet, dass** an oder neben der Gewindebohrung (11) eine Anschlagfläche (12) angeordnet ist, an der das Anschlusselement anlegbar ist, und die vorzugsweise gegenüber den Mündungen der Anschlussenden (8) der Anschlussstutzen (3, 4) vertieft ist.

12. Heizkörper mit einer Anschlusseinrichtung nach einem der vorherigen Ansprüche, **dadurch gekennzeichnet, dass** die beiden Anschlussstutzen (3, 4) an ihrem Anschlussende (8) innenseitig ein Anschlussgewinde (13) aufweisen.

13. Heizkörper mit einer Anschlusseinrichtung nach einem der vorherigen Ansprüche, **dadurch gekennzeichnet, dass** die Anschlusseinrichtung (1) an dem Heizrohr (5) des Heizkörpers angeschweißt ist, wobei die Verschweißung vorzugsweise durch Laserschweißen ausgeführt ist.

## Claims

1. A radiator with a coupling device (1) secured to a heating pipe (5) of the radiator for connecting the radiator up to a connecting element, in particular to a valve and/or directly to pipes of a heating system, wherein the coupling device comprises an inflow coupling (3) and a return coupling (4), a first end of which referred to as the radiator end (7) is respectively connected to the heating pipe (5) of the radiator, and the second end of which referred to as the coupling end (8) can be joined with a connecting element,
**characterized in that** the inflow coupling (3) and return coupling (4) are designed as an integrated piece, and that the inflow coupling (3) is spaced apart from the return coupling (4), wherein a connecting element (2a) extending over the gap is provided, and designed as a single piece with the inflow coupling (3) and return coupling (4).

2. The radiator with a coupling device according to claim 1, **characterized in that** the gap over its entire longitudinal extension and preferably over the entire height of the couplings (3, 4) is filled out completely by the connecting element (2a) over a width corresponding at least to the inner diameter of the couplings (3, 4).

3. The radiator with a coupling device according to claim 1 or 2, **characterized in that** the inflow coupling (3) and return coupling (4) are integrated as one piece into a single housing (2).

4. The radiator with a coupling device according to claim 3, **characterized in that** the coupling device (1) comprises a massive housing (2), which incorporates the inflow coupling (3) and return coupling (4), wherein the connecting element (2a) is formed by a portion of the housing (2).

5. The radiator with a coupling device according to claim 4, **characterized in that** the coupling ends (8) of the couplings (3, 4) end in a flat, lateral surface or in the flat, bottom side (9) of the housing (2).

6. The radiator with a coupling device according to claim 4 or 5, **characterized in that** one side, preferably the upper side, of the housing (2) has a recess (6) into which a section of a heating pipe (5) of the radiator is inserted at least partially, wherein the radiator ends (7) of the couplings (3, 4) end in the area of the recess (6).

7. The radiator with a coupling device according to one of the preceding claims, **characterized in that** the coupling ends (8) of the couplings (3, 4) each have a flat or conical sealing face (10) for abutment to the connecting element.

8. The radiator with a coupling device according to claim 7, **characterized in that** the sealing faces (10) of the two couplings (3, 4) are axially arranged at the same height, in particular on a shared plane.

9. The radiator with a coupling device according to one of the preceding claims, **characterized in that** attachment means (11) for attaching the connecting element to the coupling device (1) are provided, and designed as a single piece with the two couplings (3, 4).

10. The radiator with a coupling device according to claim 9, **characterized in that** a threaded borehole (11) is incorporated in the connecting element (2a) between the mouths of the coupling ends (8) of the two couplings (3, 4) as an attachment means.

11. The radiator with a coupling device according to claim 10, **characterized in that** a stop surface (12) is arranged on or by the threaded borehole (11), against which the coupling element can be placed, and which is preferably deepened relative to the mouths of the coupling ends (8) of the couplings (3, 4).

12. The radiator with a coupling device according to one of the preceding claims, **characterized in that** the inside of the coupling end (8) of the two couplings (3, 4) exhibits a coupling thread (13).

13. The radiator with a coupling device according to one of the preceding claims, **characterized in that** the coupling device (1) is welded to the heating pipe (5) of the heating element, wherein welding is preferably performed via laser welding.

## Revendications

1. Radiateur comprenant un dispositif de raccordement (1) fixé sur un tube de chauffage (5) du radiateur pour raccorder le radiateur à un élément de raccordement, en particulier à une valve et/ou directement à des tuyaux d'un système de chauffage, sachant que le dispositif de raccordement comprend un manchon de raccordement montant (3) et un manchon de raccordement descendant (4) qui sont respectivement raccordés par une première extrémité, désignée comme extrémité de radiateur (7), sur le tube de chauffage (5) du radiateur et peuvent être raccordés par une deuxième extrémité, désignée par extrémité de raccordement (8), à un élément de raccordement,
**caractérisé en ce que** le manchon de raccordement montant (3) et le manchon de raccordement descendant (4) font monobloc l'un avec l'autre, et que le manchon de raccordement montant (3) est placé à distance du manchon de raccordement descendant (4), sachant qu'un élément de liaison (2a) s'étendant sur cette distance et monobloc avec le manchon de raccordement montant (3) et le manchon de raccordement descendant (4) est prévu.

2. Radiateur comprenant un dispositif de raccordement selon la revendication 1, **caractérisé en ce que** la distance sur toute son extension en longueur et de préférence également sur toute la hauteur des manchons de raccordement (3, 4) est remplie totalement dans une largeur par l'élément de liaison (2a) qui correspond au moins au diamètre intérieur des manchons de raccordement (3, 4).

3. Radiateur comprenant un dispositif de raccordement selon la revendication 1 ou 2, **caractérisé en ce que** le manchon de raccordement montant (3) et le manchon de raccordement descendant (4) sont intégrés d'un seul tenant dans un logement unique (2).

4. Radiateur comprenant un dispositif de raccordement selon la revendication 3, **caractérisé en ce que** le dispositif de raccordement (1) comprend un logement massif (2) dans lequel le manchon de raccordement montant (3) et le manchon de raccordement descendant (4) sont insérés, sachant que l'élément de liaison (2a) est formé par une partie du logement (2).

5. Radiateur comprenant un dispositif de raccordement selon la revendication 4, **caractérisé en ce que** les extrémités de raccordement (8) des manchons de raccordement (3, 4) débouchent dans une surface latérale plane ou dans le côté inférieur (9) plan du logement (2).

6. Radiateur comprenant un dispositif de raccordement selon la revendication 4 ou 5, **caractérisé en ce que** le logement (2) présente sur un côté, de préférence sur son haut, un évidement (6) dans lequel une section d'un tube de chauffage (5) du radiateur est insérée au moins partiellement, sachant que les extrémités de radiateur (7) des manchons de raccordement (3, 4) débouchent au niveau de l'évidement (6).

7. Radiateur comprenant un dispositif de raccordement selon l'une des revendications précédentes, **caractérisé en ce que** les manchons de raccordement (3, 4) présentent sur leurs extrémités de raccordement (8) respectivement une surface d'étanchéité (10) plane ou conique pour s'appuyer sur l'élément de raccordement.

8. Radiateur comprenant un dispositif de raccordement selon la revendication 7, **caractérisé en ce que** les surfaces d'étanchéité (10) des deux manchons de raccordement (3, 4) sont placées axialement à la même hauteur, en particulier dans un plan commun.

9. Radiateur comprenant un dispositif de raccordement selon l'une des revendications précédentes, **caractérisé en ce que** des moyens de fixation (11) monoblocs avec les deux manchons de raccordement (3, 4) sont prévus pour fixer l'élément de raccordement au dispositif de raccordement (1).

10. Radiateur comprenant un dispositif de raccordement selon la revendication 9, **caractérisé en ce qu'**entre les orifices des extrémités de raccordement (8) des deux manchons de raccordement (3, 4), un trou taraudé (11) est placé comme moyen de fixation dans l'élément de liaison (2a).

11. Radiateur comprenant un dispositif de raccordement selon la revendication 10, **caractérisé en ce que** sur ou près du trou taraudé (11), une surface de butée (12) est placée sur laquelle l'élément de raccordement peut être placé et qui est préférence renfoncée par rapport aux orifices des extrémités de raccordement (8) des manchons de raccordement (3, 4).

12. Radiateur comprenant un dispositif de raccordement selon l'une des revendications précédentes, **caractérisé en ce que** les deux manchons de raccordement (3, 4) présentent un filetage de raccordement (13) à l'intérieur de leur extrémité de raccordement (8).

13. Radiateur comprenant un dispositif de raccordement selon l'une des revendications précédentes, **caractérisé en ce que** le dispositif de raccordement (1) est soudé au tuyau de chauffage (5) du radiateur, sachant que la soudure est réalisée de préférence par un soudage au laser.
